# DEMANDE DE BREVET EUROPEEN

(11) **EP 2 077 589 A1**
(43) Date de publication de la demande: **08.07.2009**
(21) Numéro de dépôt: 08173126.7
(22) Date de dépôt: 31.12.2008
(51) Int. Cl.: H01L 31/042, H01L 31/052, H01L 31/058, F24J 2/52, E04D 13/18

(54) **Élément modulaire avec module photovoltaïque**

(30) Priorité: 04.01.2008 FR 0800045
(71) Demandeur: Photowatt International S.A., 38300 Bourgoin-Jallieu (FR)
(72) Inventeur: Proisy, Bernard, 69360, SOLAIZE (FR)
(74) Mandataire: Verriest, Philippe

(57) **Abrégé**

L'invention concerne un élément modulaire (1) de construction utilisé pour fermer une toiture (24) de bâtiment en particulier une toiture plate comprenant une première face (2) inclinée par rapport à un plan horizontal comportant au moins une portion transparente ou translucide (11) agencée pour permettre l'éclairage par la lumière naturelle de l'intérieur du bâtiment, une seconde face (3) inclinée par rapport à un plan horizontal d'orientation opposée à la première face, comportant au moins un panneau solaire (15) comprenant au moins un module photovoltaïque, au moins une partie des faces de l'élément modulaire (1) comprenant au moins une couche d'isolation thermique (25) et/ou phonique (11).

## Description

L'invention concerne un élément modulaire de construction utilisé pour fermer une toiture de bâtiment, en particulier une toiture plate. L'invention concerne en outre une toiture comprenant au moins un élément modulaire selon l'invention.

Traditionnellement, les toitures de bâtiment, par exemple d'entrepôts ou d'usines, se présentent sous la forme de terrasses plates. Dans certains cas, il arrive que ces toitures soient fermées par des toitures de forme sensiblement prismatique, appelées toiture à redents, ou plus couramment « shed ». Plus précisément, ces toitures comportent des portions translucides comprenant des vitres disposées de manière à être fortement inclinées vers le côté nord dans le but d'obtenir une lumière diffuse à l'intérieur du bâtiment, mieux connu sous l'appellation « lanterneau ». En outre, ces toitures peuvent comporter un collecteur solaire, par exemple, disposé de manière à être orienté vers le sud, cette orientation particulière permettant au collecteur solaire d'être plus efficace. Une telle toiture est connue, en particulier, du document DE 25 59 226.

Toutefois, la réalisation d'une telle toiture comportant plusieurs composants de construction distincts est complexe et sa conception par des architectes dépend des dimensions du bâtiment. En effet, l'intégration de panneaux solaires sur une telle structure est complexe si l'on veut assurer des conditions de refroidissement, d'isolation et de positionnement permettant un fonctionnement satisfaisant du panneau. Par conséquent, il est nécessaire de prévoir en amont de la réalisation de ces toitures, c'est-à-dire au moment de la conception d'une telle toiture, tous les composants qui la constitueront, et de réaliser le montage de tous ces composants sur le site de construction.

De plus, une fois que les composants sont positionnés, l'étanchéité et la protection thermique de la toiture dans son ensemble sont délicates à réaliser étant donné l'ensemble hétérogène constitué par cette toiture.

La présente invention vise à résoudre en tout ou partie ces inconvénients en proposant un élément modulaire de construction permettant une réalisation facilitée d'un tel type de toiture et l'intégration de panneaux solaires. A cet effet, l'invention a pour objet un élément modulaire de construction utilisé pour fermer une toiture de bâtiment en particulier une toiture plate comprenant une paroi comportant une première face inclinée par rapport à un plan horizontal comportant au moins une portion transparente ou translucide agencée pour permettre l'éclairage par la lumière naturelle de l'intérieur du bâtiment, une seconde face inclinée par rapport à un plan horizontal d'orientation opposée à la première face, comportant au moins un panneau solaire comprenant au moins un module photovoltaïque, au moins une partie de la paroi de l'élément modulaire comprenant au moins une couche d'isolation thermique et/ou phonique.

Grâce aux dispositions selon l'invention, la réalisation d'un tel élément modulaire permet d'adapter le nombre de panneaux solaires et la surface d'éclairage global aux dimensions offertes par la toiture de bâtiment tout en assurant sur la toiture la protection thermique et/ou phonique. Le terme d'éclairage global comprend les éclairages direct, diffus et albédo.

Selon un mode de réalisation de l'invention, l'élément modulaire de construction comprend des moyens d'étanchéité conçus pour permettre la continuité de l'étanchéité entre l'élément modulaire et la toiture lorsque l'élément modulaire de construction est positionné sur la toiture.

Cette caractéristique permet d'assurer la continuité de l'étanchéité sur toute la surface de contact que présentent l'élément modulaire et la toiture lorsque l'élément modulaire de construction est positionné sur la toiture.

Selon un mode de réalisation, les moyens d'isolation thermique et/ou phonique comprennent de la laine de verre.

Cette caractéristique présente l'intérêt d'être simple à mettre en oeuvre car la laine de verre est flexible d'un point de vue mécanique et présente un poids et un coût avantageux par rapport à d'autres matériaux.

Avantageusement, les moyens d'isolation thermique et/ou phonique comprennent un double vitrage.

Ces dispositions permettent d'assurer une isolation phonique et une isolation thermique.

Selon une caractéristique de l'invention, la première face forme un angle compris entre 20° et 50°.

Une telle inclinaison du panneau solaire permet d'offrir un rendement optimal des modules photovoltaïques disposés sur la surface du panneau solaire.

Selon un mode de réalisation, la seconde face forme un angle supérieur à 60° par rapport à un plan horizontal.

Cette disposition permet de fournir une lumière diffuse à l'intérieur du bâtiment.

Avantageusement, l'élément modulaire comprend des gouttières de récupération des eaux de condensation.

Préférentiellement, l'élément modulaire de construction comprend un passage de refroidissement ménagé à l'arrière du panneau solaire dans la seconde face.

L'invention concerne en outre une toiture comprenant une armature comprenant au moins un logement et au moins un élément modulaire selon l'invention reçu dans le logement de l'armature.

Grâce aux dispositions selon l'invention, une toiture du type décrit précédemment peut être réalisée simplement en constituant une armature présentant des ouvertures formant des logements de réception pour au moins un élément selon l'invention, puis en positionnant un tel élément dans chaque logement.

De toute façon, l'invention sera bien comprise à l'aide de la description qui suit, en référence aux dessins schématiques annexés représentant, à titre d'exemple non limitatif, une forme d'exécution de cet élément de construction modulaire.
La Figure 1 est une vue en perspective d'un élément modulaire de construction côté non ensoleillé avec vitrages protégés ;
La Figure 2 est une vue en perspective d'un élément modulaire de construction, selon un second angle de vue opposé à celui de la figure 1, à savoir côté ensoleillé avec panneau solaire ;
La Figure 3 est une vue en coupe transversale selon un plan vertical passant par la ligne III-III de la figure 2 ;
La Figure 4 est une vue en coupe d'un lanterneau photovoltaïque avec la récupération de l'air réchauffé ;
La Figure 5 est une coupe schématique d'un site industriel équipé d'une récupération d'air tiédi en hiver et d'une ventilation fraîche en été.

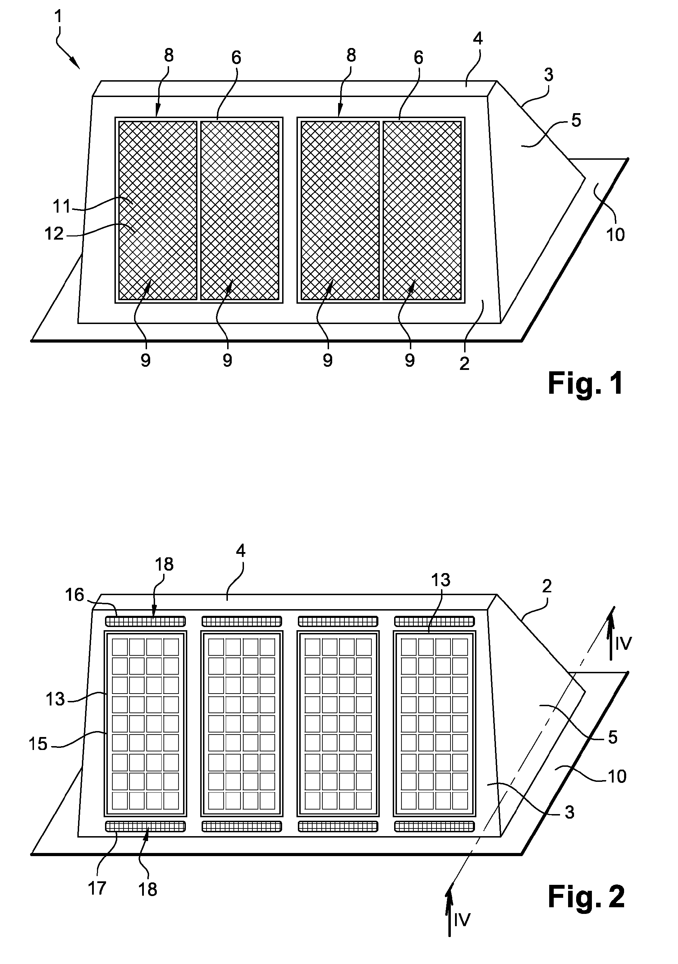

Comme représenté aux figures 1 à 3, un élément modulaire 1 de construction selon l'invention comprend un corps comportant une paroi constituée par une première face 2 inclinée par rapport à un plan horizontal, une seconde face 3 inclinée par rapport à un plan horizontal et une bande 4. L'orientation de la seconde face 3 est opposée à la première face 2 de manière à ce que les deux faces 2, 3 aient sensiblement la forme d'un V inversé, vu en coupe perpendiculairement au plan des faces. Le sommet de ce V inversé est tronqué, les deux faces étant jointes par la bande 4 plane et horizontale.

L'élément modulaire 1 comporte en outre deux faces latérales 5 disposés de manière transversale par rapport aux première et seconde faces 2, 3 et à la bande 4.

Cette paroi délimite un espace ouvert vers le bas, le bord de l'ouverture vers le bas étant constitué par les bords inférieurs des premières et secondes faces 2, 3 et des faces latérales 5. Le bord de l'ouverture est entouré par un rebord extérieur plat 10.

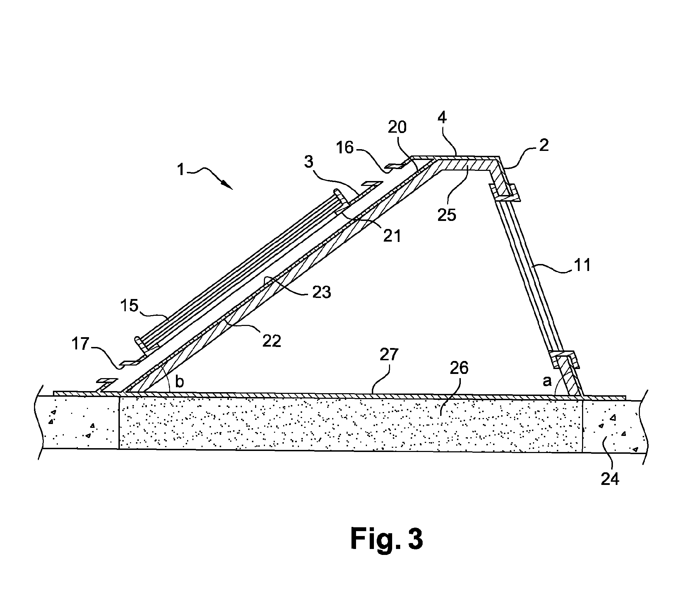

Comme illustré à la figure 3, la seconde face 3 est disposée de manière à être plus inclinée que la première face 2. Avantageusement, la première face 2 forme avec un plan horizontal un angle *a* supérieur à 60°. Préférentiellement, la seconde face 3 forme avec un plan horizontal un angle b compris entre 20° et 50°.

La première face 2 comporte des ouvertures 6 carrées ou rectangulaires qui reçoivent des surfaces 11 translucides ou transparentes. Les surfaces 11 sont réalisées à l'aide d'un matériau transparent ou translucide, par exemple du verre. Préférentiellement, les surfaces 11 comprennent un double vitrage pour améliorer les isolations thermique et phonique. Préférentiellement, ces surfaces 11 comportent un verre dépoli armé pour satisfaire les protections visuelles et anti-intrusion.

Un tel matériau est utilisé dans le but d'éclairer l'intérieur du bâtiment par la lumière naturelle, fonction de lanterneau de la toiture shed. De plus, l'utilisation d'un double vitrage permet de fournir à l'élément modulaire 1 une bonne isolation phonique et en outre une bonne isolation thermique.

De préférence, la première face 2 est disposée de manière à être orientée vers le côté nord dans l'hémisphère nord. Une telle orientation permet la transmission d'une lumière diffuse à l'intérieur du bâtiment.

Comme représenté à la figure 1, les portions 11 comportent un grillage 12 de protection. Le grillage 12 de protection est disposé par-dessus le pan 9. Ces grillages 12 de protection sont destinés, par exemple, à éviter les effractions. Selon une variante, les portions 11 sont équipées d'un verre anti-effraction renforcé.

Comme illustré à la figure 2, la seconde face 3 comporte des emplacements de réception 13 pour un panneau solaire. Comme représenté à la figure 2, la seconde face 3 comporte quatre emplacements. Les emplacements de réception 13 sont de forme rectangulaire, la largeur de chaque emplacement de réception 13 étant parallèle au plan horizontal. Au niveau de cet emplacement est positionné un cadre de réception du panneau solaire de façon à ce que l'arrière du panneau soit en regard d'une ouverture dans la paroi. Plus précisément, ils sont disposés les uns à côté des autres suivant une direction parallèle au plan horizontal. Un panneau solaire 15 est disposé au niveau de chaque emplacement de réception 13. Chaque panneau solaire 15 comprend un ensemble de modules photovoltaïques. Chaque module photovoltaïque comprend au moins une cellule photovoltaïque ou un ensemble de cellules photovoltaïques reliées entre elles électriquement.

De préférence, la seconde face 3 est disposée de manière à être orientée vers le côté sud. Une telle orientation permet de fournir un bon rendement photovoltaïque.

Dans une version à simple refroidissement naturel par convection, la seconde face 3 comprend au voisinage de chaque panneau solaire 15, deux ouvertures, respectivement 16 et 17, de forme sensiblement rectangulaire. La longueur de chaque ouverture 16, 17 est sensiblement parallèle à un plan horizontal. Plus précisément, la paroi comporte une ouverture 16 située au-dessus et une ouverture 17 située au-dessous de chaque panneau solaire, de manière à ce que les deux ouvertures 16, 17 et le panneau solaire 15 soient alignés. Il est à noter que la longueur de chaque ouverture 16, 17 est sensiblement égale à la largeur du panneau solaire 15 au voisinage duquel elles se trouvent. Une grille 18 à maillage fin est disposée au niveau de chaque ouverture 16, 17 pour empêcher la pénétration d'insectes ou autres nuisibles.

Comme représenté à la figure 3, une face supplémentaire 20 est disposée à l'arrière du panneau solaire 15. La face supplémentaire 20 est sensiblement parallèle à la seconde face 3. Ces dispositions permettent d'agencer un passage 21 à l'arrière du panneau solaire 15. Le passage 21 est relié aux deux ouvertures 16, 17 situées au voisinage du panneau solaire 15.

II est important de rappeler que lors du fonctionnement des panneaux solaires 15, les cellules photovoltaïques placées au soleil s'échauffent. Comme la chaleur entraîne une diminution du rendement des cellules photovoltaïques, il est nécessaire d'éviter leur échauffement intempestif. Ainsi, l'agencement d'un tel passage 21 présente l'avantage considérable de permettre à l'arrière des panneaux photovoltaïques 15, une ventilation qui se fait par convection naturelle. Cette ventilation permet un échange thermique entre le panneau solaire 15 et l'air ambiant, et assure par conséquent un refroidissement des panneaux solaires 15.

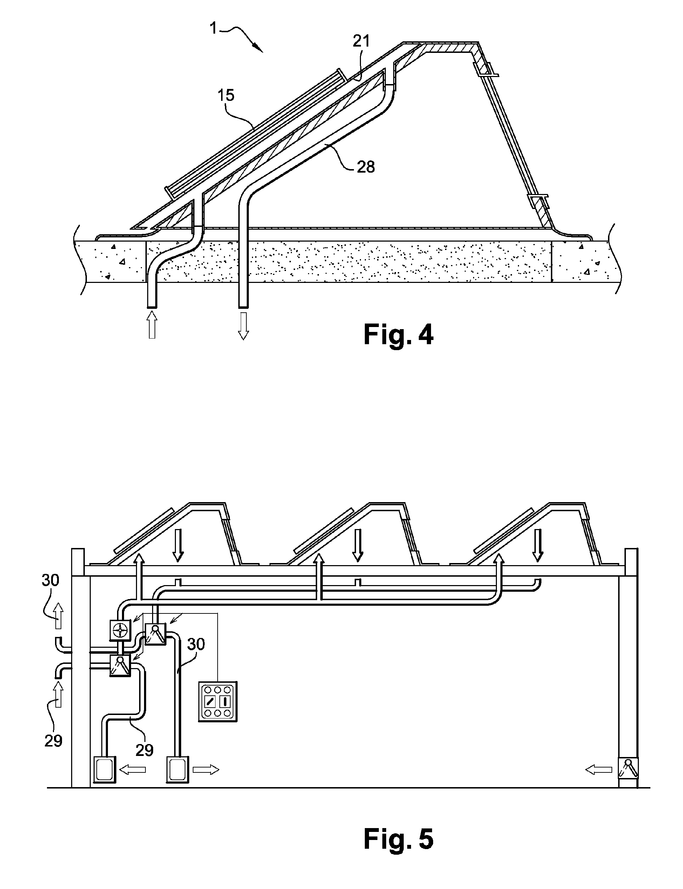

Selon une variante de réalisation plus élaborée de l'invention, représentée à la figure 4, l'élément modulaire 1 peut comprendre un système de raccordements 28 entre les passages 21 situés à l'arrière des panneaux solaires 15 et l'intérieur du bâtiment. Ces dispositions permettent de mettre à profit l'air chauffé par les panneaux solaires 15. L'air ainsi chauffé dans les passages 21 serait injecté à l'intérieur du bâtiment permettant son chauffage en hiver, par exemple. La figure 5 montre symboliquement et à titre d'exemple une coupe d'un local industriel équipé d'une variante de réalisation de l'invention avec récupération de l'air réchauffé pour la ventilation en hiver. La figure 5 montre aussi de façon symbolique le rafraîchissement du bâtiment par la circulation de l'air frais 29 en été et le rejet de l'air chaud 30 à l'extérieur.

La face supplémentaire 20, la bande 4, la première face 2 et les faces latérales 5 de l'élément modulaire 1 forment un ensemble présentant une surface interne 22 et une surface externe 23. La surface interne 22 est destinée à être orientée vers l'intérieur du bâtiment une fois l'élément modulaire 1 disposé sur une toiture 24 de bâtiment. La surface externe 23 est destinée à être en contact avec l'extérieur du bâtiment.

Des moyens d'isolation thermique sont disposés sur la surface interne 22 de l'ensemble tel que défini précédemment excepté au niveau des ouvertures 16, 17 de la seconde face 3.

Les moyens d'isolation thermique comprennent un matériau isolant thermiquement. II doit être bien compris que le choix du matériau isolant thermiquement se rapportera préférentiellement sur de la laine de verre 25 qui présente un poids et un coût avantageux par rapport à d'autres matériaux et qui en outre est flexible d'un point de vue mécanique et simple d'utilisation.

La laine de verre 25 possède une épaisseur suffisante pour assurer à la fois une bonne isolation phonique et une bonne isolation thermique.

Le positionnement de l'élément modulaire 1 de construction sur la toiture plate 24 définit une surface de contact 26 entre l'élément modulaire 1 et la toiture plate 24 au niveau du rebord 10. Des moyens d'étanchéité sont disposés sur toute la surface de contact 26, c'est-à-dire à l'interface de l'élément modulaire 1 et de la toiture plate 24. En particulier, ces moyens d'étanchéité comprennent un joint 27. Ce joint 27 est destiné à assurer la continuité de l'étanchéité entre l'élément modulaire 1 et la toiture plate 24 lorsque l'élément modulaire 1 de construction est positionné sur la toiture. Ce joint 27 est destiné à éviter toute perte de chaleur de l'intérieur vers l'extérieur du bâtiment ou toute introduction d'eau par la toiture dans le bâtiment.

Selon une variante, la première face 2 est équipée de gouttières, non représentées sur les figures 1, 2 ou 3. Symboliquement les gouttières de récupération de l'eau de condensation sont représentées figure 4 par des trous d'évacuation situés en bas de la double paroi à l'arrière des modules photovoltaïques. Les gouttières sont disposées au voisinage des panneaux solaires 15 et de préférence sous les panneaux solaires 15. Elles ont pour but de récupérer des eaux qui se condensent à la surface des panneaux solaires 15.

Afin de disposer un tel élément modulaire de construction sur une toiture plate d'un bâtiment, une armature, non représenté sur le dessin, est utilisée. L'armature comprend un logement dans lequel est disposé l'élément modulaire. L'armature est destinée à fermer la toiture du bâtiment.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Élément modulaire (1) de construction utilisé pour fermer une toiture (24) de bâtiment en particulier une toiture plate comprenant une paroi comportant
une première face (2) inclinée par rapport à un plan horizontal comportant au moins une portion transparente ou translucide (11) agencée pour permettre l'éclairage par la lumière naturelle de l'intérieur du bâtiment,
une seconde face (3) inclinée par rapport à un plan horizontal d'orientation opposée à la première face, comportant au moins un panneau solaire (15) comprenant au moins un module photovoltaïque,
au moins une partie des faces de l'élément modulaire (1) comprenant au moins une couche d'isolation thermique (25) et/ou phonique (11).

2. Élément modulaire (1) de construction selon la revendication 1 comprenant des moyens d'étanchéité (27) conçus pour permettre la continuité de l'étanchéité entre l'élément modulaire (1) et la toiture (24) lorsque l'élément modulaire (1) de construction est positionné sur la toiture (24).

3. Élément modulaire (1) de construction selon l'une des revendications précédentes, dans lequel les moyens d'isolation thermique (25) et/ou phonique comprennent de la laine de verre (25).

4. Élément modulaire (1) de construction selon l'une des revendications précédentes, dans lequel les moyens d'isolation thermique et/ou phonique comprennent un double vitrage.

5. Élément modulaire (1) de construction selon l'une des revendications précédentes, selon lequel la première face (2) forme un angle (b) compris entre 20 et 50 °.

6. Élément modulaire (1) de construction selon l'une des revendications précédentes, selon lequel la seconde face (3) forme un angle (a) supérieur à 60°.

7. Élément modulaire (1) de construction selon l'une des revendications précédentes, dans lequel l'élément modulaire comprend des gouttières de récupération des eaux de condensation.

8. Élément modulaire (1) de construction selon l'une des revendications précédentes, dans lequel un passage de refroidissement (21) est ménagé à l'arrière du panneau solaire (15) dans la seconde face.

9. Toiture comprenant une armature comportant au moins un logement et au moins un élément modulaire (1) selon l'une des revendications précédentes reçu dans le logement de l'armature.
